# EUROPÄISCHE PATENTANMELDUNG

(11) **EP 1 034 829 A1**
(43) Veröffentlichungstag der Anmeldung: **13.09.2000**
(21) Anmeldenummer: 00810177.6
(22) Anmeldetag: 01.03.2000
(51) Int. Cl.: B01D 29/11, B01D 29/15, B01D 29/33

(54) **Filtereinheit mit einer Vielzahl von Filterkerzen**

(30) Priorität: 10.03.1999 CH 1999044
(71) Anmelder: PORETTI-GAGGINI SA, 6930 Bedano (CH)
(72) Erfinder: Ronco, Giovanni, 21030 Brissago/Valtravaglia (IT)
(74) Vertreter: Gaggini, Carlo, Ing.

(57) **Zusammenfassung**

Die vorliegenden Erfindung bezieht sich auf Filtereinheiten mit einer Vielzahl von Filterkerzen zum Filtrieren von festen Partikeln aus einer Suspension in einer Flüssigkeit.

Ziel der Erfindung ist das Überwinden der Gefahr, dass die Filterkerzen (11) gegenseitig zusammenstossen, infolge der Verformung der Befestigungsplatte (10) der Filterkerzen (11) unter der Einwirkung der Druckdifferenz Δp im Filter. Zur Erfüllung dieses Zieles sieht die vorliegenden Erfindung vor, dass die Befestigungsplatte (10) der Filterkerzen (11) auf der Seite nach den Filterkerzen (11) an mindestens einem Punkt abgestützt wird, unter Verwendung eines einstellbaren Abstützelementes (17; 24). Dieses Abstützelement hat die Aufgabe, die Verformungswirkung zu verringern, welche die Druckdifferenz Δp = (p₁ - p₂) auf die Platte (10) ausübt, wobei p₁ der Druck ist, der vor den Filterkerzen (11) herrscht, und p₂ der Druck ist, der nach den Filterkerzen (11) herrscht.

## Beschreibung

Die vorliegende Erfindung betrifft eine Filtereinheit mit einer Vielzahl von Filterkerzen zum Filtrieren von Feststoffpartikeln aus einer Suspension in einer Flüssigkeit gemäss dem Oberbegriff des Patentanspruchs 1.

Filtereinheiten solcher Art mit einer Vielzahl von Filterkerzen finden heute beim Filtrieren von Flüssigkeiten in der mechanischen Bearbeitung mit Späneabfuhr und im Besonderen in Bearbeitungsprozessen, bei denen die abgeführten Späne nur wenige um goss sind (beispielsweise 1-3 µm), wie dies bei der Elektroerosion von Metallen oder beim Schleifen mit hoher Geschwindigkeit der Fall ist.

In dieser Art von Filtereinheiten, in welchen eine Vielzahl von langen und dünnen Filterkerzen in einer mit Löchern für je eine Filterkerze versehenen Platte befestigt werden, besteht grundsätzlich die Notwendigkeit eine möglichst gross Zahl von Filterkerzen in einem möglichst kleinen Raum unterzubringen, damit eine maximale Filterfläche in einem kleinstmöglichen Volumen der Filtereinheit erreicht werden kann. Dies führte zur Entwicklung langer und dünner Filterkerzen, die möglichat nahe beieinander montiert werden, damit in einer Umhüllung gegebener Abmessungen eine möglichst grosse filtrierende Oberfläche der Filterkerzen erreicht werden kann.

Diese filtrierende Fläche sei hier einfachheitshalber bloss als äussere Oberfläche der Filterkerzen von kreiszylindrischer oder anderer Form definiert. Diese ist insofern eine Vereinfachung, als heute bekanntlich auch Filterkerzen aus aufeinandergeschichteten Scheibchen aus dünnsten Papier oder anderen Materialien im Gebrauch stehen, bei welchen die Filtrierung in den zwischen den einzelnen Scheibchen vorliegenden Spalten erfolgt. Dabei entspricht offensichtlich die filtrierende Oberfläche einer solchen Filterkerze nicht der äusseren Oberfläche dieser Filterkerze sondern der Summe der auf ihrer Oberfläche vorliegenden Spalten. Unabhängig von der Konstruktionsart der Filterkerzen besteht ein allen Filtereinheiten dieser Art gemeinsames Problem aufgrund der Art der Befestigung der Filterkerzen in der zylindrischen Umhüllung der Filtereinheit. Die Filterkerzen sind dabei mit einem ihrer Enden in einer Befestigungsplatte montiert, die für jede der Filterkerzen mit einem durchgehenden Loch versehen ist. Jede der Filterkerzen weist dabei eine Dichtung auf, normalerweise in der Form eines Gummiringes, der die Filterkerze gegenüber der Befestigungsplatte abdichtet. Somit werden in der Umhüllung der Filtereinheit zwei Kammern gebildet: die eine, in der die Filterkerzen angebracht sind, in welche die zu filtrierende Flüssigkeit eintritt, und die andere, von der obengenannten Kammer abgetrennte Kammer, in welche die Innenkanäle der Filterkerzen münden, d.h. also die Kammer, aus der die filtrierte Flüssigkeit aus der Filtereinheit austritt. Zwischcen diesen beiden Kammern besteht während des Betriebs der Filtereinheit ein Druckunterschied, da der in der erstgenannten Kammer, die als "Kammer vor den Filterkerzen" bezeichnet werden kann, herrschende Druck p₁ grösser ist als der in der zweiten genannten Kammer, die als "Kammer nach den Filterkerzen" bezeichnet werden kann, herrschende Druck p₂. Die Druckdifferenz Δp = mit p₁ - p₂ entspricht dem Druckabfall infolge des Filterwiderstands gegen den Durchtritt der zu filtrierenden Flüssigkeit. Es liegt auf der Hand, dass sich die Druckdifferenz mit der Zeit verändert und von einem Minimalwert Δp min bei vollständig gereinigtem Filter (beispielsweise nach einer Reinigung des Filters, die auch Regeneration genannt wird, und die mit einer Umkehr der Durchgangsrichtung der Flüssigkeit erreicht wird) bis auf einen Maximalwert Δp max, der erreicht wird, wenn die Filterkerzen den grössten vorgesehenen Filtriergrad erreicht haben. In der Regel entspricht die Druckdifferenz Δp max auch jener, bei deren Erreichung der Vorgang der Filterregeneration automatisch ausgelöst wird, denn die Druckdifferenz Δp max ist ein genaues Mass des Verschmutzungsgrades des Filters. Die Druckdifferenz Δp max kann dabei beträchtliche Werte erreichen, die Verformungen der den Druck einschliessenden Bauelemente hervorrufen können, die daher jederzeit unter Kontrolle gehalten werden müssen.

Insbesondere ist die Platte, in der die Filterkerzen eingebaut sind, und welche die Filtereinheit in die zwei Kammern unterteilt, dieser Verformungsgefahr ausgesetzt. Auf diese Platte wirkt die gesamte Druckdifferenz Δp ein, so dass sie sich wie eine bombierte Kuppel zu verformen sucht. Dieser Effekt ist besonders stark, weil diese Platte zur Befestigung der Filterkerzen infolge der Durchgangsbohrungen zur Aufnahme der in geringen Abständen untereinander angeordneten Filterkerzen relativ stark geschwächt ist. Auch wenn die Dicke der Befestigungsplatte relativ dick gewählt wird, macht sich diese Schwächung bemerkbar. Andererseits beeinflusst die Plattendicke indirekt sowohl das Gewicht der Filtereinheit als auch die Herstellkosten, da die Plattendicke nicht zu gross (etwa 10 mm Dicke) gewählt werden kann, ohne dass beträchtliche wirtschaftliche Nachteile in Kauf zu nehmen sind. Zieht man in Betracht, dass die Filterkerzen bei einem Durchmesser von 3-4 cm etwa 1 m lang sind, und dass sie in solcher Weise in der Platte befestigt werden, dass die Abstände zwischen deren Oberflächen an den engsten Stellen in der Grössenordnung von wenigen Millimetern liegen (normalerweise von3 bis 6 mm), damit der verfügbare Raum der Filtereinheit bestmöglich ausgenützt werden kann, so wird ersichtlich, dass bereits eine kleine Aufwölbung der Befestigungsplatte für die Filterkerzen eine grosse seitliche Verlagerung der freien Enden der Filterkerzen hervorruft, da sich die Verschiebung der Befestigungsplatte gegenüber der Horizontalebene im Verhältnis der Länge zum Durchmesser der Filterkerzen vervielfacht, also etwa 25-30 fach. Infolgedessen neigen die freien Enden der Filterkerzen dazu, sich gegenseitig zu berühren, was einerseits den Durchtritt der Flüssigkeit erschwert und andererseits die Gefahr von Beschädigungen der Filterkerzen selbst hervorruft. Beschädigte Filterkerzen, auch nur lokal beschädigte Filterkerzen sind gleichzusetzen mit verstopften und damit unwirksamen Filterkerzen, besonders im Fall von Filterkerzen aus aufeinander geschichteten Papierrondellen.

Filter mit Filterkerzen dieses Typs, die auch die genannten Nachteile aufweisen entsprechen dem bekannten Stand der Technik.

So zeigen beispielsweise die WO-96/14127 und die DE-4215585-A1 Filtereinheiten mit Filterkerzen, deren Aufbau vollständig der Einleitung der vorliegenden Erfindungsbeschreibung entspricht und bei denen daher das Problem der Verformung der Platte für die Befestigung der Filterkerzen, ein Problem, das unabhängig davon auftritt, ob die Filterkerzen vertikal hängend in einer horizontalen Befestigungsplatte angeordnet sind, wie dies in der Fig. 1 der WO-9614127 oder in der Fig. 3 der DE-4215585-A1 dargestellt ist, oder ob sich die Filterkerzen von einer Grundplatte aus nach oben erstrecken, wie dies beispielsweise in den Figuren 1 und 2 der DE-4215585-A1 gezeigt ist, oder ob die Filterkerzen horizontal angeordnet sind.

Die Zielsetzung der vorliegenden Erfindung besteht darin, die genannten Nachteile des Standes der Technik zu überwinden und insbesondere die Gefahr zu vermeiden, dass sich die Filterkerzen gegenseitig berühren können und dabei Schaden nehmen können und dadurch das einwandfreie Funktionieren der Filtereinheit in Frage stellen können. Diese Zielsetzungen werden erfüllt mit Hilfe einer Filtereinheit mit einer Vielzahl von Filterkerzen mit den Eigenschaften gemäss dem charakterisierenden Teil des Patentanspruchs 1.

Dank der Anordnung, dass die Befestigungsplatte für die Filterkerzen von der Seite nach den Filterkerzen her mindestens an einem Punkt abgestützt ist, reduziert sich gemäss den Gesetzmässigkeiten der Plattenverformung die grösste Auslenkung der Platte am Ort der grössten Aufwölbung ganz wesentlich, wobei sich dieser Punkt im Raum verschieben kann, je nachdem an welchem oder an welchen Punkten die Platte abgestützt ist so dass sie sich nicht verformen kann. Die nun geringere Verbiegung der Platte ruft eine seitliche Verschiebung des äusseren Endes der Filterkerzen hervor, wobei die Filterkerzen im Wesentlichen im rechten Winkel zur Befestigungsoberfläche in Platte ausgerichtet bleiben. Die Filterkerzen berühren sich jedoch gegenseitig an keinem Punkt mehr, und das einwandfreie Funktionieren der Filtereinheit bleibt über den ganzen Filtrierzyklus zwischen zwei Regenerierphasen sichergestellt.

Gemäss einer ersten bevorzugten Ausführungsform der vorliegenden Erfindung ist der Querschnitt des umhüllenden Gehäuses der Filtereinheit kreiszylindrisch gewählt und die Befestigungsplatte, die in diesem Fall die Form einer kreisrunden Scheibe hat, wird in ihrem Mittelpunkt unterstützt, d.h. nur in einem einzigen Punkt. Diese Auslegung ist vorteilhaft, da sie die einfachste vorstellbare Lösung darstellt und die Verwendung von Gehäusen erlaubt die sich bestens eignen, einen Innendruck auszuhalten. Die Mehrzahl der Filtereinheit mit einer Vielzahl von Filterkerzen weist eine solche Form auf.

Gemäss einer weiteren bevorzugten Ausführungsform der vorliegenden Erfindung wird die Befestigungsplatte an einer Vielzahl von Punkten unterstützt, die bezüglich des geometrischen Mittelpunktes symmetrisch angeordnet sind. Diese Vielzahl von Punkten, die auch eine durchgehende Linie bilden können, erlaubt eine weitere Verringerung der grössten Durchbiegung der Platte, falls die Anordnung der Punkte bzw. der daraus gebildeten Linie der Abstützung entsprechend den Plattenverformungsgesetzen erfolgt, die jedem Fachmann auf dem Gebiet bekannt sind und daher hier nicht weiter erläutert werden.

Eine weitere Ausführungsform der vorliegenden Erfindung beruht darauf, dass die Platte beim Einbauen vorgespannt wird, wobei die Vorspannkraft einer mittleren Verformung entspricht, die zwischen der minimalen Verformung (wenn die Filterkerzen sauber sind und demnach die Druckdifferenz Δp dem kleinsten Wert entspricht) und der grössten Verformung (wenn die Filterkerzen stärksten verstopft sind und die Druckdifferenz Δp den grössten Wert erreicht, der auch die Regenerierphase auslöst) liegt. Dank dieser Auslegung streben die Filterkerzen zu Beginn des Filtrierprozesses leicht (divergierend) auseinander während sie gegen das Ende des Filtrierzyklus leicht konvergieren: die Abweichung von der genauen Parallellage der Filterkerzen verteilt sich dabei auf beide Seiten, wodurch deren Einfluss weiter verringert.

Weitere bevorzugte Ausführungsformen, die Gegenstand der abhängigen Patentansprüche sind, werden sodann unter Bezugnahme auf die in den Abbildungen dargestellten Beispielen genauer erklärt. Die Figuren zeigen:
- Fig. 1: Eine Filtereinheit mit einer Vielzahl von Filterkerzen gemäss dem für die vorliegende Erfindung massgebenden Stand der Technik im schematisch dargestellten Schnitt,
- Fig. 2: Einen Querschnitt durch die Filtereinheit gemäss der Fig. 1 längs der Linie A-A in der Fig. 1,
- Fig. 3: Die Filtereinheit gemäss den Figuren 1 und 2 im Ruhezustand, d.h. ausser Betrieb, in schematischer Darstellung,
- Fig. 4: Die Filtereinheit gemäss der Fig. 3, jedoch im Betriebszustand dargestellt, um den Effekt der Verformung der Befestigungsplatte für die Filterkerzen während der Betriebsphase der Filtereinheit aufzuzeigen,
- Fig. 5: Eine erste bevorzugte Variante der Filtereinheit mit einer Vielzahl von Filterkerzen gemäss der vorliegenden Erfindung, mit einer an einem zentralen Punkt abgestützten Befestigungsplatte,
- Fig. 6: Ein Querschnitt durch die Filtereinheit gemäss der Fig. 5 längs der Linie B-B in der Fig. 5,
- Fig. 7: Eine vergrösserte Darstellung einer Einzelheit der Filtereinheit gemäss der Figuren 5 und 6 zur detaillierten Darstellung des Abstützungspunktes der Befestigungsplatte,
- Fig. 8: Eine weitere Ausführungsform der erfindungsgemässen Filtereinheit bei der die Befestigungsplatte für die Filterkerzen längs einer durchgehenden Linie von Punkten abgestützt ist,
- Fig. 9: Ein Querschnitt längs der Linie C-C in der Fig. 8 der Filtereinheit gemäss der Fig. 8,
- Fig. 10: Eine schematische Darstellung entsprechend jener der Figuren 3 und 4 zur Darstellung der Verformung der einer Druckbelastung ausgesetzten Befestigungsplatte für die Filterkerzen in einer erfindungsgemässen Filtereinheit gemäss den Figuren 5 bis 7,
- Fig. 11: Eine schematisch Darstellung entsprechend der Fig. 10 einer Filtereinheit gemäss der vorliegenden Erfindung wie in den Figuren 8 und 9,
- Fig. 12: Eine schematisch Darstellung des Querschnittes einer Filtereinheit gemäss der vorliegenden Erfindung mit Filterkerzen von quadratischem Querschnitt .

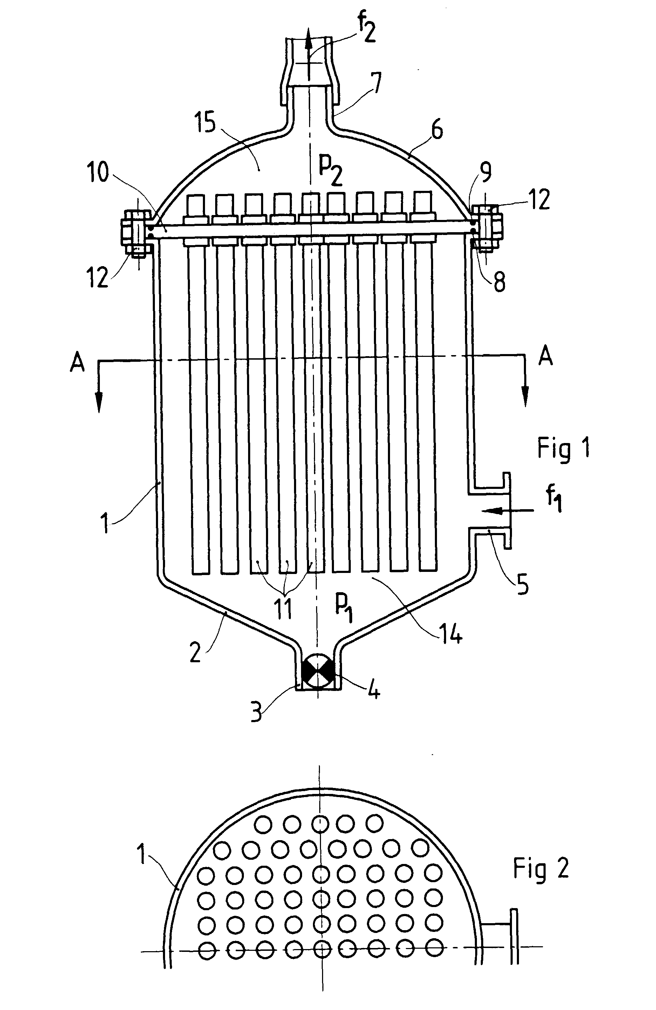

In den Figuren 1 bis 4 ist der allgemeine Aufbau einer Filtereinheit mit einer Vielzahl von Filterkerzen gemäss dem für die vorliegenden Erfindung massgeblichen Stand der Technik schematisch dargestellt.

In der Fig. 1 ist ein kreiszylindrisches umhüllendes Gehäuse 1 zu erkennen (vergl. auch die Fig. 2, in der ein Querschnitt längs der Linie A-A gemäss der Fug.1 gezeigt ist), das unten mit einem Boden 2 von vorzugsweise nach unten konisch verengter Form abgeschlossen wird (die geeignete Form, die das Abziehen des abfiltrierten Materials durch den Ablaufhahn 3 mit dem Verschlussventil 4 während des Regenerationsprozesses besser erlaubt).

Das zylindrische umhüllende Gefäss umfasst ferner eine seitlich angeordnete Einspeiseöffnung 5 für die zu filtrierende Flüssigkeit (deren Zuleitung im Wesentlichen auf irgendwelche Weise angeordnet sein kann), und ist oben mittels eines Deckels 6 abgeschlossen in dessen Mitte die Auslassöffnung 7 für die filtrierte Flüssigkeit angeordnet ist.

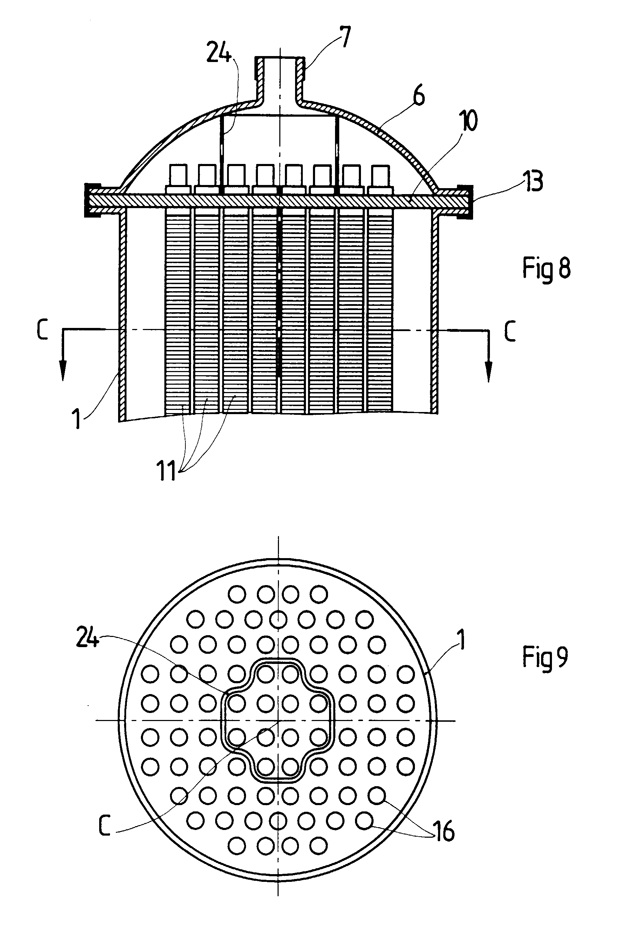

Zwischen dem zylindrischen Gefäss 1 und dem Deckel 6 ist die Befestigungsplatte 10 abdichtend montiert, welche die vertikal und untereinander parallel angeordneten Filterkerzen 11 aufnimmt, wenn die Filtereinheit mit vertikal gerichteter Längsachse aufgestellt wird. Die Filterkerzen 11 sind in der Befestigungsplatte 10 auf beliebige Art in solcher Weise eingebaut, dass eine zuverlässige gegen Flüssigkeitsdurchgang abdichtende Befestigung sichergestellt ist. Eine solche Befestigungsart wird beispielsweise mittels einer Mutter erreicht, die auf einen mit einem Gewinde versehenen Schaft der Filterkerze aufgeschraubt wird, wie dies im Folgenden unter Bezugnahme auf eine bevorzugte Ausführungsform der vorliegenden Erfindung (siehe die Fig. 7) dargestellt wird. Auch andere Befestigungsarten sind durchaus denkbar, wie beispielsweise durch Einpressen, oder ähnliche Befestigungsarten; wichtig ist dabei einzig, dass die Befestigung starr ist, so dass die Filterkerzen 11 infolgedessen alle Verschiebungen mitmachen wenn sich die Befestigungsplatte 10 verformt.

Die Art der Befestigung des Deckels 6 auf dem Gefäss 1 spielt im Rahmen der vorliegenden Erfindung ebenfalls bloss eine nebensächliche Rolle. Die einfachste Befestigungsart, nämlich die Befestigung durch Verschraubung mittels zweier Flansche und eines Kranzes von Bolzenschrauben 12, ist die naheliegendste aber durchaus nicht die einzige mögliche Befestigungsart. Andere geeignete Befestigungsarten sind beispielsweise jene mittels radial angeordneter Klemmzwingen (siehe die Fig. 8, in der eine solche Zwinge abgebildet ist) oder ähnliche Schnellverbindungselemente. Die in ihren Elementen beschriebene Filtereinheit entspricht dem bekannten Stand der Technik und bleibt in ihre beiden Kammern unterteilt, nämlich in eine Kammer 14 vor den Filterkerzen 11, in der Fliessrichtung der zu filtrierenden Flüssigkeit von der Einlassöffnung 5 zur Auslassöffnung 7 gesehen (die auch mit dem Pfeil f1 bzw. mit dem Pfeil f2 angedeutet ist, und in eine Kammer 15 nach den Filterkerzen 11. In der Kammer 14 herrscht während des Betriebs der Filtereinheit ein Druck p₁, während in der Kammer 15 ein Druck p₂ herrscht. Damit die Filtrierung stattfinden kann, muss p₁ > p₂ sein, wobei die Druckdifferenz p₁ - p₂ = Δp den Druckabfall im Filter repräsentiert: Es handelt sich dabei um einen in Funktion der Verschmutzung der Filterkerzen 11 veränderlichen Wert. Auf jeden Fall wirkt diese Druckdifferenz auf die ganze Fläche der Befestigungsplatte 10 ein, die infolge der Vielzahl nahe beieinander liegender Durchgangsbohrungen (damit in der Filtereinheit eine möglichst grosse Anzahl von Filterkerzen untergebracht werden kann) beträchtlich geschwächt ist.

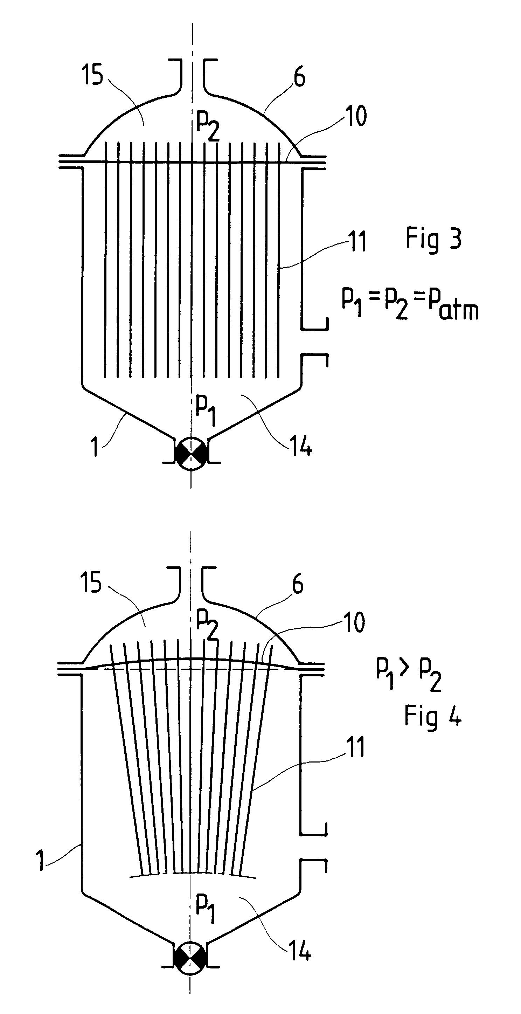

In den Figuren 3 und 4 ist schematisch dargestellt, was in einer Filtereinheit gemäss dem Stand der Technik passiert, wobei in der Fig. 3 die Filtereinheit im Ruhezustand gezeigt ist, d.h. wenn keine zu filtrierende Flüssigkeit durchtritt und daher p₁ = p₂ = p atm gilt, während in der Fig. 4 die gleiche Filtereinheit im Betriebszustand dargestellt ist, während welcher p₁ > p₂.

Wie aus der Fig. 3 ersichtlich ist, sind die Filterkerzen 11 während des Ruhezustandes untereinander parallel ausgerichtet, genau wie sie in der ebenen Befestigungsplatte 10 eingebaut worden sind. Zu beachten ist, dass die Filterkerzen 11 in den Figuren 3 und 4 nur mit einer Linie dargestellt sind, die der Längsachse entspricht. In Wirklichkeit sind die Filterkerzen einen kreisrunden Querschnitt aufweisen, und dass die geringsten Abstände zwischen ihren Oberflächen nur wenige Millimeter betragen (in der Regel 3-6 mm). Die Figuren 3 und 4 sind bloss lediglich als schematische Darstellungen zu verstehen, die lediglich die Lage der Längsachse der lediglich die Lage der Längsachsen der Filterkerzen 11 untereinander andeuten soll. Aus der Fig. 4, in der die Verformung der Befestigungsplatte 10 für die Filterkerzen 11 unter der Einwirkung der Druckdifferenz p₁ - p₂ zur Verbesserung der Deutlichkeit bewusst übertrieben dargestellt wurde, ist ersichtlich, wie sich die Platte bei der Verformung gegen die Kammer 15 hin aufwölbt, weshalb die Filterkerzen 11 dazu neigen sich gegenüber der Gehäuseachse in solcher Weise schräg zu stellen, dass sich die freien Enden der Filterkerzen 11 einander annähern und sich schliesslich berühren und sich gegenseitig beschädigen bzw. den Durchtritt der zu filtrierenden Flüssigkeit erschweren. Offensichtlich ist diese Annäherung der freien Enden der Filterkerzen um so ausgesprochener, je grösser die Verformung der Befestigungsplatte 10 ist. Diese Verformung hängt ausser von der Druckdifferenz Ap auch von der Auslegung der Platte selbst ab (Dicke, Material, Anzahl der Bohrungen, usw.) sowie von der Einspannung der Platte 10 zwischen dem Gefäss 1 und dem Deckel 6 der Filtereinheit ab. Je fester die Platte zwischen den Flanschen des Gefässes 1 und des Deckels 6 eingespannt ist, um so weniger kann sie sich verformen. Allerdings ist daran zu erinnern, dass die Platte 10 abdichtend zwischen dem Gefäss 1 und dem Deckel 6 montiert werden muss, aus welchem Grund normalerweise Dichtungsringe 8 und 9 (vergl. die Fig. 1) eingelegt werden, die eine starre Verankerung der Platte am Rand ausschliessen. Daraus folgt, dass der Belastungsfall einer einfachen Abstützung der Platte auf dem Rand entspricht, bei dem sich die grösste Auslenkung durch die Wölbung und daher auch die grösste Neigung der Filterkerzen 11 nach innen ergibt.

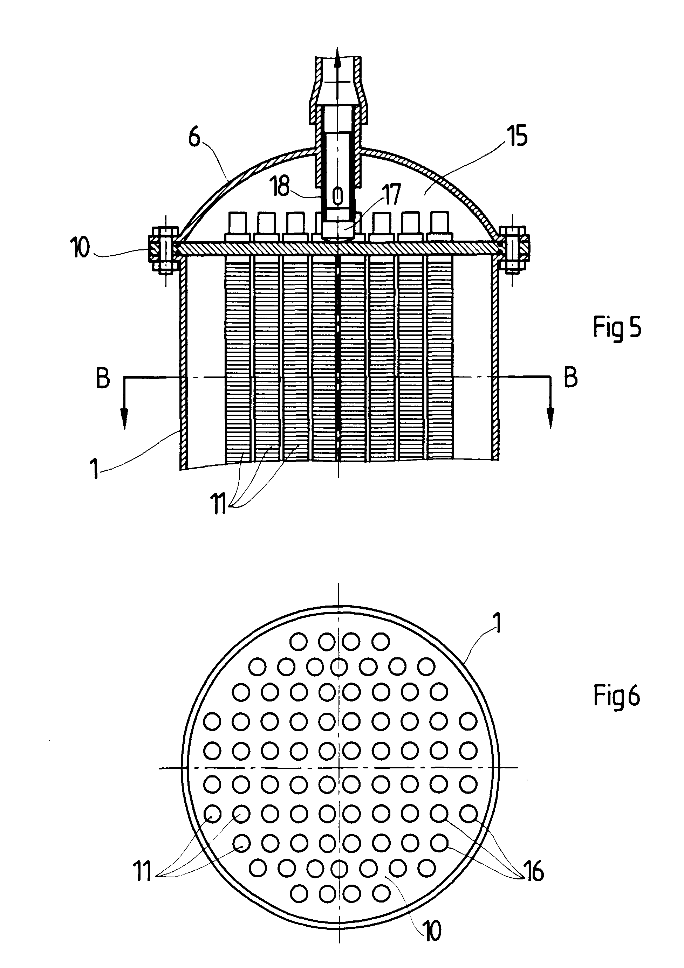

Die vorliegenden Erfindung, gemäss welcher die Verformung der Platte 10 vorgeschlagen wird, ist im Folgenden unter Bezugnahme auf eine erste bevorzugte Ausführungsform beschrieben, die in den Figuren 5 und 7 in einem Schnitt durch den oberen Teil (der die Platte 10 darstellt) bzw. im Schnitt (Fig. 6) durch eine erfindungsgemässe Filtereinheit zeigen.

Die Elemente in den Figuren 5 und 7, die solchen in den vorhergehenden Figuren entsprechen sind dabei mit den gleichen Bezugszeichen bezeichnet.

In der Fig. 6 soll bloss dargestellt werden, in welcher Weise die Filterkerzen 11 in der Befestigungsplatte 10 eine nahe bei der anderen in solcher Weise befestigt sind, dass die Platte 10 von all den Durchgangslöchern 16 für die Befestigung der Filterkerzen durchlöchert ist, welche sie zu einer Art "Fleischbrühesieb" macht: es liegt auf der Hand, dass eine solche Platte 10 schwächer und leichter verformbar ist als eine durchgehende Platte ohne Löcher.

Die Platte 10 wird nun erfindungsgemäss in ihrer Mitte auf der Seite nach den Filterkerzen 11, d.h. von der Kammer 15 her, mittels eines einstellbaren Abstützelementes abgestützt, das in Form eines Stössels 17 ausgelegt ist, und in eine Gewindebüchse 18 eingeschraubt ist, die fest mit dem Deckel 6 der Filtereinheit verbunden ist.

Die Konstruktion dieses Abstützelementes ist in der Fig. 7 detailliert dargestellt. Daraus ist ersichtlich, dass der Stössel 17 aus zwei Teilen besteht, genauer gesagt aus einem vollen Teil 19, der mittels einer Nabe 20 auf ein hohles und mit einem Aussengewinde 22 versehene Rohr 21 aufgeschraubt wird. Der Innenraum des hohlen Teils 21 steht mit der Kammer 15 über einen länglichen Durchbruch 23 in Verbindung. Der hohle Teil 21 ist mit seinem Gewindeteil 22 in das Innengewinde der Gewindebüchse 18 eingeschraubt. Wird der hohle Teil 21 mehr oder weniger tief in die Buchse 18 eingeschraubt, so kann der Abstand zwischen der Spitze des Stössels 17 und dem Deckel 6 der Filtereinheit, wodurch der Druck, welchen der Stössel 17 auf den Mittelpunkt der Platte 10 ausübt, beim Zusammenbau beeinflusst werden. Dieser Druck kann von einem kleinsten Wert Null, bei welchem der Stössel 17 im Ruhezustand der zusammengebauten Filtereinheit die Platte 10 nur gerade streift oder gar nicht ganz berührt, bis zu einem Maximalwert reichen, der in einem solchen Fall einen Vorspannungseffekt bewirkt, der die Platte 10 in umgekehrter Richtung vor-verformt, als sie nachher während des Betriebs der Filtereinheit unter der Einwirkung der Druckdifferenz Δp verformt wird. Die Art und Weise, wie die Lage des Abstützelementes oder Stössels 17 einzuregulieren ist, wird im Folgenden näher beschrieben.

Die Öffnung 23 ist erforderlich, damit die Büchse 18 auch als Auslass-Stutzen 7 für die filtrierte Flüssigkeit dienen kann, die aus der Kammer 15 nach den Filterkerzen aus der Filtereinheit weggeführt werden kann. Selbstverständlich wäre es ohne weiteres möglich, einen separaten Flüssigkeitsauslass getrennt vom Abstützelement 17 für die Platte anzuordnen, und in diesem Fall müsste der Stössel 17 nicht als hohles Element ausgeführt werden, und die längliche Öffnung 23 wäre nicht erforderlich.

Die erfindungsgemässe Filtereinheit gemäss den Figuren 5 bis 7 weist ein zylindrisches Gehäuse 1 von kreisrundem Querschnitt auf und die Platte 10 wird in ihrer Mitte mittels des Stössels 17 abgestützt. Dies stellt eine bevorzugte Ausführungsform der vorliegenden Erfindung dar, gekennzeichnet durch ihre leichte Herstellbarkeit und ihre geringen Herstellungskosten. Allerdings sind auch andere Gehäuseformen denkbar (beispielsweise rechteckige oder quadratische) und die Platte könnte in anderen Bereichen als in der Mitte abgestützt sein wie es in den Figuren 8 und 9 dargestellt ist und einer weiteren Ausführungsform der vorliegenden Erfindung entspricht.

Auch in diesen Figuren sind die in den vorhergehenden Figuren gleich dargestellten Elemente wiederum mit den gleichen Bezugszeichen versehen. Im dargestellten Fall ist jedoch die Befestigungsplatte 10 an einer Vielzahl von Punkten abgestützt, die bezüglich des Zentrums C der Platte 10 symmetrisch angeordnet sind. In diesem besonderen Beispiel, das in den Figuren 8 und 9 dargestellt ist, wird die Platte 10 mittels einer Abstützwand 24 abgestützt, die bestimmte Punkte auf der Platte verbindet, die zusammen eine Kurvenlinie bilden, der auf dem Deckel 6 entsprechende Punkte zugeordnet sind. Selbstverständlich muss sich die Form der Wand 24 der Anordnung der Filterkerzen 11 in der Filtereinheit anpassen: so nimmt im dargestellten Beispiel die Abstützwand 24 eine in der Fig. 9 gezeigte Form eines vierseitigen Sterns an, damit sie sich einer bestimmten Anordnung der Filterkerzen 11 anpassen kann. Generell ist festzuhalten, dass beim idealen Festlegen der geometrischen Auslegung der Filtereinheit in erster Linie die Anordnung der Filterkerzen von Bedeutung ist. Dabei geht es darum, eine möglichst grosse Anzahl Filterkerzen auf kleinstmöglichem Raum anzuordnen wobei immer ein minimaler und vorzugsweise vor allem gleicher Abstand zwischen den einzelnen Filterkerzen einzuhalten ist. Dieser Anforderung muss sich daher die Form de Abstützwand 24 anpassen, deren Form entsprechend dem zwischen den Filterkerzen 11 verfügbaren Raum ausgewählt wird, wobei den Gesetzmässigkeiten der Plattenverformung Rechnung zu tragen ist. Dies im Hinblick auf die Zielsetzung, dass die Verformung der Platte 10 minimal gehalten werden soll.

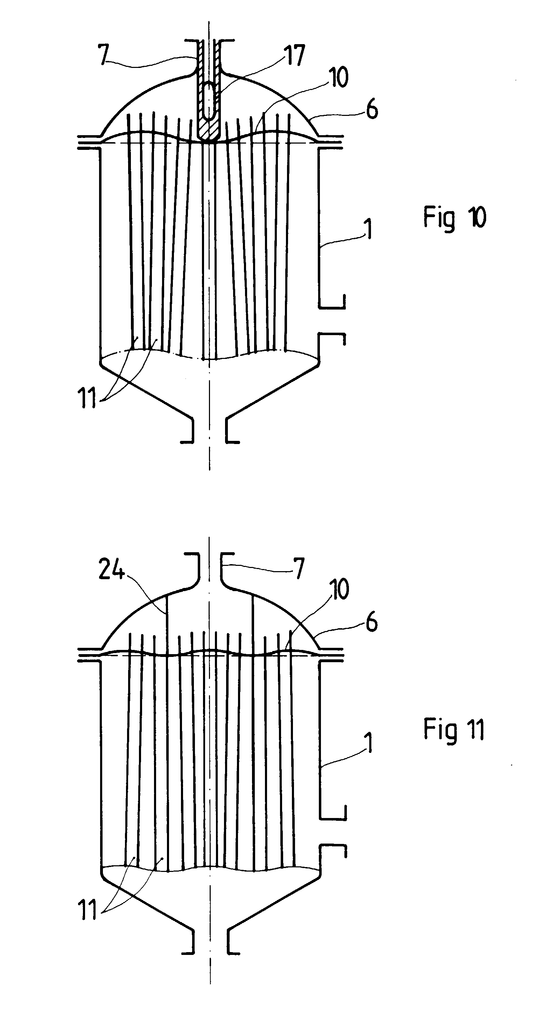

In den Figuren 10 und 11 ist in einer ähnlichen Ansicht, wie sie in den Figuren 3 und 4 gezeigt ist, schematisch dargestellt, wie sich eine erfindungsgemässe Filtereinheit während des Betriebs verhält, wie jene gemäss den Figuren 5 bis 7 bzw. wie jene gemäss den Figuren 8 und 9. Auch in diesem Fall ist die Verformung der Platte 10 unter der Einwirkung der Druckdifferenz Ap zur besseren Verständlichkeit übertrieben gross dargestellt. Der Fachmann auf dem Gebiet kann jedoch die Verformung einer Platte 10 für den Fall der Abstützung in ihrem Mittelpunkt, wie in der Fig. 10, oder für den Fall der Abstützung längs einer zwischen dem Rand des Gehäuses 1 und dem Mittelpunkt verlaufenden Linie mit genügender Genauigkeit berechnen. Die grössten Verformungen, verglichen mit dem Belastungsfall gemäss der Figuren 3 und 4, verringern sich um einen grossen Faktor, wobei sich auch die Neigung der Filterkerzen 11 und praktisch jede Gefahr, dass sich die Filterkerzen berühren, recht wesentlich verringert. Dank der Abstützung der Platte 10, wie sie die vorliegenden Erfindung vorschlägt, ist es auch möglich, die Dicke der Platte 10 bei gleichbleibender maximalen Verformung dünner auszulegen, wodurch sich das Gewicht und die Kosten der Filtereinheit verringern.

Gemäss einer bevorzugten Variante der Ausführungsform der vorliegenden Erfindung ist sodann vorgesehen, dass die Vorspannung, die schon vorher erwähnt worden war, eine Vorverformung der Platte 10 in der Richtung bewirkt, die der Verformung infolge der während des Betriebs der Filtereinheit einwirkenden Druckdifferenz Ap entgegengesetzt ist, so gewählt wird, dass die Verformung der Platte 10 kompensiert wird, die sich einstellt, wenn die Platte 10 einer mittleren Druckdifferenz Δp = (p₁ - p₂) zwischen der Druckdifferenz Δp min = (p₁ - p₂)ₘᵢₙ, wenn die Filterkerzen sauber sind, und der Druckdifferenz Δp max = (p₁ - p₂)ₘₐₓ , wenn die Filterkerzen 11 am stärksten verschmutzt sind, bevor die Filterreinigung einsetzt. In diesem Fall tendieren die Filterkerzen 11 beim Beginn des Filtrierzyklus mit absolut sauberen Filterkerzen unter dem Einfluss der Verformung der Platte 10, etwas auseinander zu streben, d.h. sich leicht von einander zu entfernen, ohne dass jedoch die äussersten Filterkerzen 11 mit der Wand des zylindrischen Gehäuses in Berührung kommen können. Sobald die Filtereinheit ihren höchsten Verschmutzungsgrad erreicht hat, bei dem ihre Regeneration vorgesehen ist, tendieren die Filterkerzen unter der Einwirkung der Verformung der Platte 10, leicht gegen die Mitte hin zu konvergieren: Diese symmetrische Verteilung der Neigung der Filterkerzen 11 gegenüber ihrer gegenseitig parallelen Lage erlaubt eine bessere Ausnützung des in der Filtereinheit verfügbaren Raums, d.h. die Filterkerzen 11 können näher beieinander und daher in grösserer Anzahl angeordnet werden.

Bezüglich der Möglichkeiten, während des Einbaus eine Vorspannung der Platte 10 zu realisieren, stehen verschiedene Vorgehensweisen zur Wahl. Das einfachste Vorgehen, das sich besonders für die Lösung gemäss den Figuren 5 bis 7 eignet, sieht vor dass mittels eines in eine Büchse 18 eingeschraubten Stössels zuerst der Deckel 6 (mittels Schrauben, Zwingen oder irgendwelcher anderer Mittel) auf ein Gehäuse 1 moniert wird, wonach der Stössel 17 aus der Büchse 18 soweit heraus geschraubt wird, bis dieser mit der gewünschten Kraft auf die Platte 10 drückt. Zur Ausführung dieser Operation kann man von aussen zum holen Teil des Stössels 17 gelangen, bevor der Ausgangsstutzen 7 mit der Ablaufleitung verbunden wird. Diese Lösung ist jedoch nur anwendbar, wenn das Abstützelement, wie beispielsweise der Stössel 17, einschraubbar und somit gegenüber dem Deckel 6 verstellbar ausgelegt ist. Ist jedoch, wie in den Figuren 8 und 9, das Abstützelement als Abstützwand 24 ausgebildet, die am Deckel 6 oder an der Platte 10 fest angebracht ist, also in seiner Höhenlage nicht einstellbar ist (somit eine Wand fest vorgegebener Höhe, die lokal anders sein kann, um dem Abstand zwischen dem Deckel 6 und dem Abstützpunkt auf der Platte 10 Rechnung zu tragen,, der entsprechend der Form der Abstützwand variieren kann), so kann die Vorspannung während des Einbaus erzeugt werden, indem eine Wand von etwas grösserer Höhe eingebaut wird als jener, die erforderlich wäre, um beim Schliessen des Deckels 6 auf dem Gehäuse 1 der Filtereinheit die blosse Berührung ohne Verformung der Abstützwand 24 auf er Platte 10 sicherzustellen. Diese Art und Weise, die Vorspannung der Platte 10 zu bewirken gelingt unabhängig von der gewählten Art der Befestigung des Deckels 6 auf dem Gehäuse 1. Jedenfalls ist klar, dass die Verbindung, die mit einem Kranz von Bolzenschrauben wie in der Figur 1 gezeigt) erreicht wird, die zuverlässigste ist und die besten Voraussetzungen bietet, die richtige Verformung der Platte 10 durch die Vorspannung zu erreichen. Dabei ist zu beachten, dass eine solche Vor-Verformung in der Grössenordnung von Zehntelsmillimetern liegt, so dass ihre Einstellung mit grosser Genauigkeit erfolgen muss.

Eine weitere bevorzugte Ausführungsform der vorliegenden Erfindung, die im Fall eines zentral angeordneten Stössels 17 entsprechend der Ausführung gemäss den Figuren 5 bis 7 vorsieht, dass der Stössel 17 als hohles Rohr 21 ausgebildet wird, auf dessen der Platte 10 zugewendete Ende ein voller Zylinder 19 montiert wird, der in einer kugelförmig ausgebildeten Berührungsfläche 25 auf der Platte 10 endet, was ermöglicht, dass der Stössel 17 die Platte 10 verformen kann, ohne dass die Gefahr entsteht, dass übermässige lokale Drücke entstehen, unter welchen die Platte 10 eingefurcht und zerstört werden kann (Kantendruck).

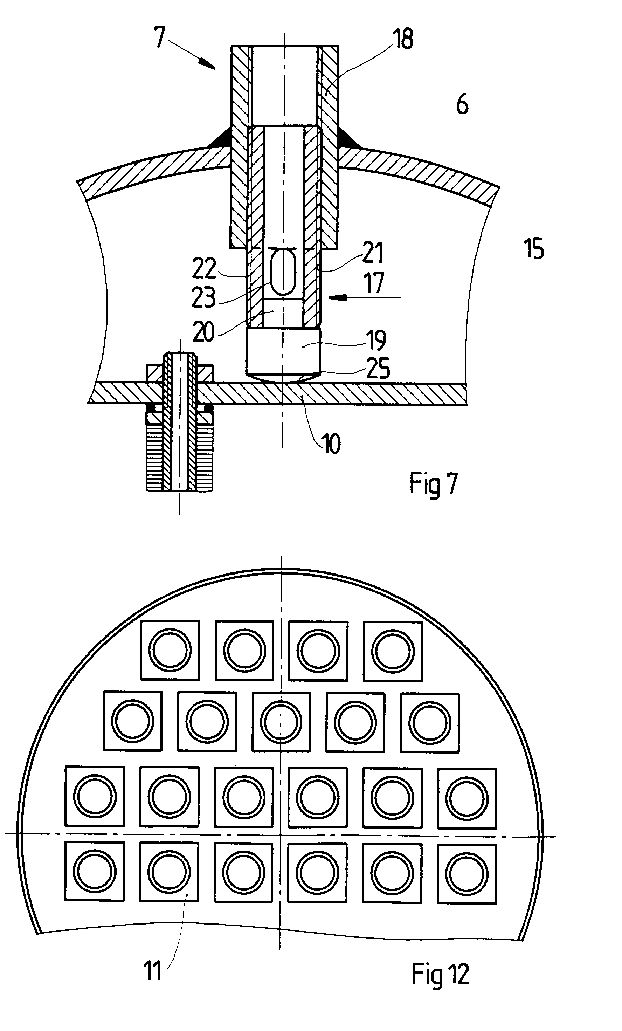

In einer weiteren bevorzugten Ausführungsform der vorliegenden Erfindung ist ferner vorgesehen, dass die Filterkerzen 11 mit quadratischem Querschnitt ausgelegt sind. Diese Lösung, die in der Fig. 12 schematisch dargestellt ist, bietet den grossen Vorteil, dass der in der Filtereinheit verfügbare Raum bestmöglich ausgenützt werden kann, da die Abstände zwischen den Filterkerzen überall auf das für den Durchtritt der zu filtrierenden Flüssigkeit zwischen den Filterkerzen noch notwendige und bei der Verformung der Befestigungsplatte 10 noch tragbare Minimum reduziert ist (wobei diese Verformung im Fall der Anwendung der vorliegenden Erfindung stark vermindert, aber immer noch vorhanden ist), welche Verformung die seitliche Verschiebung der Filterkerzen verursacht, welcher die vorliegenden Erfindung Abhilfe schaffen soll.

Zum Schluss sei nochmals unterstrichen, dass das hier angegangene Problem unabhängig von der Ausrichtung der Filterkerzen im Raum auftritt, d.h. sowohl wenn diese vertikal (wie dies normalerweise der Fall ist), als auch horizontal oder geneigt angeordnet in einer oben oder unten angeordneten Befestigungsplatte eingebaut sind. Auch spielt die Art der zu filtrierenden Flüssigkeit im Rahmen der vorliegenden Erfindung keinerlei Rolle; es kann sich dabei um Öl, Wasser, Dielektrikum, usw. handeln, und das gleiche gilt für das Material, aus dem die Filterkerzen gefertigt sind; sei es Papier, Filtergewebe, Metallgerüst, usw. Bei allen Filtereinheiten mit einer Vielzahl von langen und relativ dünnen Filterkerzen tritt dieses Problem der Lagestabilität der Filterkerzen auf, das von der vorliegenden Erfindung angegangen wird.

### Liste der in den Figuren dargestellten Elemente

- 1: Zylindrisches Gehäuse
- 2: Boden
- 3: Entleerungsstutzen
- 4: Absperrhahn
- 5: Einlassstutzen
- 6: Deckel
- 7: Abflussstutzen
- 8: Dichtungsring
- 9: Dichtungsring
- 10: Befestigungsplatte
- 11: Filterkerzen
- 12: Schrauben
- 13: Befestigungszwingen
- 14: Kammer vor den Filterkerzen 11
- 15: Kammer nach den Filterkerzen 11
- 16: Befestigungsbohrung
- 17: Stössel
- 18: Gewindebuchse
- 19: Volles Element des Stössels 17
- 20: Nabe
- 21: Hohler Teil des Stössels 17
- 22: Aussengewinde
- 23: Längliche Öffnung
- 24: Abstützwand
- 25: Berührungsfläche

## Patentansprüche

1. Filtereinheit mit einer Vielzahl von Filterkerzen zum Filtrieren von festen Partikeln aus einer Flüssigkeit, mit einem Gehäuse (1), in dem eine Vielzahl von Filterkerzen (11) untergebracht sind, die untereinander parallel angeordnet und an je einem ihrer Enden in einer Befestigungsplatte (10) je in einer durchgehenden Befestigungsbohrung befestigt und gegenüber der Bohrung abgedichtet sind, wobei die Platte (10) die Filtereinheit in zwei Kammern unterteilt, nämlich in eine in der Durchflussrichtung der zu filtrierenden Flüssigkeit vor den Filterkerzen (11) liegende Kammer (14), in der ein Druck p₁ herrscht, und in eine Kammer (15) nach den Filterkerzen (11), in der ein Druck p₂ herrscht, wobei Beziehung p₁ > p₂ herrscht,
dadurch gekennzeichnet, dass
die Platte (10) auf der Seite nach den Filterkerzen (11) an mindestens einem Punkt mittels eines Abstützelementes (17, 24) abgestützt ist, das in solcher Weise einstellbar ist, dass die verformende Wirkung, welche die Druckdifferenz Δp = (p₁ = p₂) auf die Platte (10) ausübt, verringert wird.

2. Filtereinheit mit einer Vielzahl von Filterkerzen gemäss dem Anspruch 1,
dadurch gekennzeichnet, dass
das Gehäuse (1) ein Zylinder mit kreisrundem Querschnitt ist, und dass die Platte (10) an ihrem Mittelpunkt abgestützt wird.

3. Filtereinheit mit einer Vielzahl von Filterkerzen gemäss dem Anspruch 1,
dadurch gekennzeichnet, dass
die Platte (10) an einer Vielzahl von Punkten abgestützt wird, die in Bezug auf das geometrische Zentrum der Platte (10) symmetrisch angeordnet sind.

4. Filtereinheit mit einer Vielzahl von Filterkerzen gemäss dem Anspruch 2,
dadurch gekennzeichnet, dass
das Abstützelement (17, 24), das die Platte abstützt, ein Stössel (17) ist, der im Zentrum des Deckels (6) des Gehäuses (1) mittels einer Verschraubung befestigt ist.

5. Filtereinheit mit einer Vielzahl von Filterkerzen gemäss dem Anspruch 4,
dadurch gekennzeichnet, dass
der Stössel (17) die Form eines hohlen Rohrs (21) aufweist, das mit einer Öffnung (23) zur Kammer (15) nach den Filterkerzen versehen ist, so dass es ein Ablaufrohr (7) für die filtrierte Flüssigkeit bildet.

6. Filtereinheit mit einer Vielzahl von Filterkerzen gemäss dem Anspruch 1,
dadurch gekennzeichnet, dass
die Platte (10) unter einer Vorspannung in der Filtereinheit eingebaut wird.

7. Filtereinheit mit einer Vielzahl von Filterkerzen gemäss dem Anspruch 6,
dadurch gekennzeichnet, dass
die Vorspannung, mit der die Platte (10) eingebaut wird, so gewählt ist, dass die Verformung kompensiert wird, welche die Platte (10) erleidet, wenn sie einer mittleren Druckdifferenz Δp = (p₁ - p₂) unterworfen ist, zwischen der kleinsten Druckdifferenz Δp min = (p₁ - p₂)ₘᵢₙ bei sauberen Filterkerzen (11) und der grössten Druckdifferenz Δp max = (p₁ - p₂)ₘₐₓ bei der grössten Verschmutzung der Filterkerzen (11) bevor die Regenerierung des Filters einsetzt.

8. Filtereinheit mit einer Vielzahl von Filterkerzen gemäss dem Anspruch 5,
dadurch gekennzeichnet, dass
der Stössel (17) die Form eines hohlen Rohrs (21) aufweist, auf dessen der Platte (10) zugewendeten Ende ein voller Element (19) befestigt wird, das in einer gegen die Platte (10) gerichteten, kugelförmigen Berührungsfläche (25) endet.

9. Filtereinheit mit einer Vielzahl von Filterkerzen gemäss dem Anspruch 5,
dadurch gekennzeichnet, dass
die Filterkerzen (11) rechteckigen Querschnitt aufweisen.
